(19) Europäisches Patentamt / European Patent Office / Office européen des brevets

(11) **EP 3 377 384 B1**

(12) **FASCICULE DE BREVET EUROPEEN**

(45) Date de publication et mention
de la délivrance du brevet:
**04.01.2023   Bulletin 2023/01**

(21) Numéro de dépôt: **16806268.5**

(22) Date de dépôt: **09.11.2016**

(51) Classification Internationale des Brevets (IPC):
*B62D 5/04* (2006.01)        *B62D 15/02* (2006.01)

(52) Classification Coopérative des Brevets (CPC):
**B62D 15/025; B62D 5/0463**

(86) Numéro de dépôt international:
**PCT/FR2016/052907**

(87) Numéro de publication internationale:
**WO 2017/085378 (26.05.2017 Gazette 2017/21)**

(54) **PROCÉDÉ D'AIDE A LA CONDUITE D'UN VÉHICULE AUTOMOBILE**

FAHRERASSISTENZVERFAHREN FÜR EIN KRAFTFAHRZEUG

DRIVER ASSISTANCE METHOD FOR A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **19.11.2015   FR 1561140**

(43) Date de publication de la demande:
**26.09.2018   Bulletin 2018/39**

(73) Titulaire: **Renault s.a.s**
**92100 Boulogne Billancourt (FR)**

(72) Inventeurs:
• **MINOIU-ENACHE, Nicoleta**
**78000 Versailles (FR)**
• **GEOFFRIAULT, Maud**
**91300 Massy (FR)**
• **DO, Anh Lam**
**92370 Chaville (FR)**
• **MENANTEAU, Etienne**
**75015 Paris (FR)**

(74) Mandataire: **Renault Group**
**Renault s.a.s.**
**API : TCR GRA 2 36**
**1, Avenue du Golf**
**78084 Guyancourt Cedex (FR)**

(56) Documents cités:
**US-A1- 2004 230 375     US-A1- 2008 047 775
US-A1- 2015 191 199**

EP 3 377 384 B1

## Description

DOMAINE TECHNIQUE AUQUEL SE RAPPORTE L'INVENTION

La présente invention concerne de manière générale le domaine des procédés d'aide à la conduite pour véhicules automobiles.

Elle concerne plus particulièrement un procédé au cours duquel un couple correctif est automatiquement appliqué sur un organe de direction d'un véhicule automobile.

ARRIÈRE-PLAN TECHNOLOGIQUE

De nombreux véhicules automobiles sont équipés aujourd'hui d'un système de conduite assistée permettant, par l'intermédiaire d'un moteur électrique, d'exercer un couple supplémentaire sur la colonne de direction du véhicule afin d'aider le conducteur de ce véhicule à manœuvrer le volant de direction du véhicule.

Il est connu également d'équiper un véhicule automobile d'un système d'aide à la conduite comprenant une caméra frontale, ou un autre capteur tel qu'un radar, permettant de déterminer la position de ce véhicule sur une voie de circulation qu'il emprunte.

Lorsqu'un écart du véhicule par rapport au milieu de cette voie de circulation est détecté, ou lorsqu'il est détecté que ce véhicule est sur le point de sortir de cette voie de circulation, un couple correctif est exercé sur la colonne de direction du véhicule afin de corriger la trajectoire du véhicule pour le ramener sensiblement au milieu de cette voie de circulation. Ce couple correctif s'ajoute au couple exercé par le conducteur du véhicule sur le volant de direction.

Le document US2008/0047775A1 révèle les caractéristiques du préambule de la revendication 1 et divulgue un appareil de braquage électrique dans lequel trois couples de compensation sont ajoutés à un couple d'assistance de base. Deux couples de compensation sont multipliés par un même gain pour éviter des interférences entre les contrôle de compensation.

Un tel système d'aide à la conduite permet ainsi de limiter les sorties de route du véhicule, et/ou permet de maintenir le véhicule sensiblement au milieu de la voie de circulation qu'il emprunte, sans intervention de son conducteur, ou avec une intervention réduite de ce dernier.

On connait notamment du document EP 2591983 un système d'aide au maintien d'un véhicule dans sa voie de circulation, permettant d'exercer un couple correctif sur la colonne de direction de ce véhicule, en plus du couple exercé par le conducteur sur le volant de direction de ce véhicule, afin d'aider ce conducteur à maintenir le véhicule dans sa voie de circulation. La valeur de ce couple correctif est modulée en tenant compte du couple exercé par le conducteur du véhicule sur le volant de direction de ce véhicule, et en tenant compte du fait que le véhicule automobile roule en ligne droite ou aborde au contraire un virage serré. En particulier, la valeur de ce couple correctif est réduite lorsque le véhicule aborde un virage afin de permettre au conducteur de s'écarter de la voie de circulation qu'il emprunte pour couper ce virage au plus court.

Mais, lorsque ce système entre en action, ce couple correctif peut s'ajouter soudainement, en présentant une valeur élevée, au couple exercé par le conducteur sur le volant de direction du véhicule, ce qui est désagréable pour le conducteur et est susceptible de le perturber dans sa conduite du véhicule.

OBJET DE L'INVENTION

Afin de remédier à l'inconvénient précité de l'état de la technique, la présente invention propose un nouveau procédé d'aide à la conduite d'un véhicule automobile empruntant une voie de circulation, comprenant les étapes suivantes :

  a) on acquiert au moins une donnée relative à une position du véhicule automobile par rapport à la voie de circulation,
  b) on vérifie si le véhicule automobile sort ou est sur le point de sortir inopinément de ladite voie de circulation,
  c) lorsque cette sortie inopinée est détectée, on déclenche une phase d'intervention au cours de laquelle on exerce sur ledit organe de direction un couple correctif pour que le véhicule automobile suive une trajectoire cible,

le calcul dudit couple correctif comprenant les opérations suivantes :

  i) on acquiert un angle de braquage effectif dudit organe de direction du véhicule,
  ii) on détermine, en fonction de la donnée acquise à l'étape a), un angle de braquage cible dans lequel ledit organe de direction devrait être placé pour que le véhicule automobile suive ladite trajectoire cible,
  iii) on détermine un angle de braquage cible filtré de manière à ce que :

  - à un instant initial de ladite phase d'intervention, l'angle de braquage cible filtré est égal à l'angle de braquage effectif à cet instant initial, puis que
  - après cet instant initial, l'angle de braquage cible filtré tend vers ledit angle de braquage cible, en présentant un taux de variation dont la valeur absolue reste inférieure à un premier seuil déterminé, et

  iv) on détermine ledit couple correctif à exercer, en fonction de cet angle de braquage cible filtré.

Une sortie inopinée du véhicule automobile de la voie de circulation qu'il emprunte peut correspondre notamment à une sortie de cette voie de circulation involontaire de la part du conducteur du véhicule automobile, par exemple du fait d'un état de distraction ou de somnolence de ce conducteur.

L'organe de direction susmentionné correspond par exemple à la colonne de direction du véhicule automobile, ou encore à une crémaillère de direction de ce véhicule.

L'angle de braquage mentionné ci-dessus peut correspondre à une position angulaire du volant de direction du véhicule, à une position de la crémaillère de direction de ce véhicule, ou encore à un angle repérant l'orientation de roues du véhicule.

Le couple correctif se superpose à un couple exercé par un conducteur du véhicule par l'intermédiaire du volant de direction de ce véhicule.

Grâce au filtrage réalisé lors de l'opération iii), lorsque ladite phase d'intervention débute, la valeur absolue du couple correctif exercé sur l'organe de direction du véhicule augmente progressivement, sans à-coup, ce qui est agréable pour le conducteur du véhicule et évite de le surprendre ou de le perturber dans sa conduite du véhicule.

Cette assistance au conducteur du véhicule automobile, introduite ainsi progressivement, permet en outre de stimuler le conducteur (mais sans le surprendre) et de lui indiquer que sa conduite a rendu nécessaire une intervention, ce qui permet par exemple d'inciter le conducteur à être plus vigilant.

Selon l'invention, lors de l'opération iii), on détermine l'angle de braquage cible filtré de manière que, en outre, dès que la différence entre l'angle de braquage cible filtré et l'angle de braquage cible s'annule ou change de signe, l'angle de braquage cible filtré tend vers ledit angle de braquage cible en présentant un taux de variation dont la valeur absolue reste inférieure à un deuxième seuil déterminé qui est supérieur audit premier seuil.

D'autres caractéristiques non limitatives et avantageuses du procédé d'aide à la conduite conforme à l'invention sont les suivantes :

- ladite sortie inopinée est détectée en fonction de la donnée acquise à l'étape a) ;
- ladite sortie inopinée est détectée en outre en fonction de l'angle de braquage effectif ;
- ladite sortie inopinée est détectée en fonction de l'état actif ou inactif des clignotants du véhicule automobile ;
- le couple correctif exercé sur ledit organe de direction du véhicule est déterminé en outre en fonction d'un couple exercé par le conducteur du véhicule sur cet organe de direction ;
- au cours de ladite phase d'intervention, il est prévu de suspendre l'assistance, en annulant le couple correctif, lorsque le couple exercé par le conducteur du véhicule sur ledit organe de direction dépasse un seuil déterminé donné ;

- lorsque l'assistance est suspendue et qu'une sortie inopinée du véhicule automobile hors de la voie de circulation qu'il emprunte est détectée (en absence d'une action marquée du conducteur du véhicule automobile sur l'organe de direction de ce véhicule), il est prévu de déclencher une reprise de l'assistance en exerçant à nouveau ledit couple correctif sur ledit organe de direction du véhicule ; et
- la reprise de l'assistance est déclenchée en fonction également du couple exercé par le conducteur du véhicule automobile sur ledit organe de direction.

Préférentiellement, il est prévu également que lors de l'opération iii), le filtrage de l'angle de braquage cible soit réalisé de manière que :

- à un instant initial de ladite reprise de l'assistance, l'angle de braquage cible filtré est égal à l'angle de braquage effectif à cet instant initial, puis que
- après cet instant initial, l'angle de braquage cible filtré tend vers ledit angle de braquage en présentant un taux de variation dont la valeur absolue reste inférieure à un troisième seuil déterminé donné, ce troisième seuil étant inférieur, par exemple, audit deuxième seuil.

On peut prévoir aussi qu'au cours de l'opération iii), l'angle de braquage cible filtré soit déterminé en outre de manière à présenter une valeur absolue restant inférieure à un seuil de sécurité déterminé.

## DESCRIPTION DÉTAILLÉE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 représente schématiquement sous la forme d'un schéma-bloc des opérations mises en œuvre au cours d'un procédé d'aide à la conduite d'un véhicule automobile selon l'invention, pour calculer un couple correctif à exercer sur un organe de direction de ce véhicule,
- la figure 2 représente schématiquement, pour un exemple de trajet de ce véhicule automobile, l'évolution au cours du temps de différentes grandeurs acquises ou déterminées au cours du procédé comprenant les opérations représentées figure 1,
- la figure 3 représente schématiquement, pour ce trajet du véhicule automobile, les intervalles temporels pendant lesquels un premier, un deuxième et un troisième seuil prédéterminés sont utilisés respectivement pour limiter un taux de variation d'un angle de braquage cible filtré,
- la figure 4 représente schématiquement, pour ce trajet du véhicule automobile, une phase d'intervention au cours de laquelle on exerce ce couple correctif sur l'organe de direction du véhicule automobile, ainsi qu'un intervalle temporel pendant lequel on suspend l'assistance à la conduite de ce véhicule en annulant ce couple correctif.

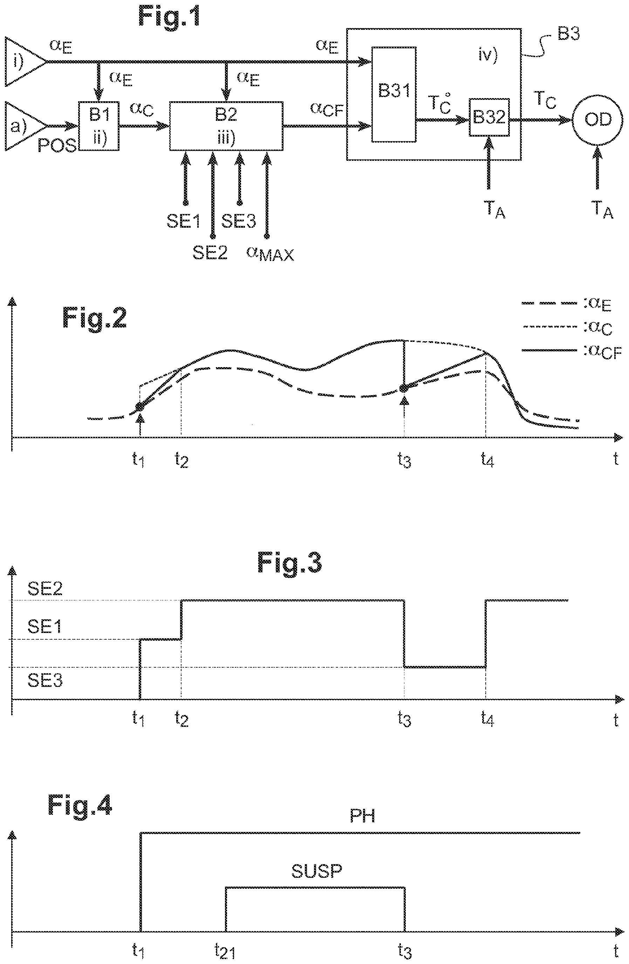

L'exemple de procédé d'aide à la conduite d'un véhicule automobile, selon l'invention décrit ci-dessous est mis en œuvre dans un véhicule automobile comprenant notamment un capteur permettant de déterminer un angle de braquage effectif $\alpha_E$ d'un organe de direction OD de ce véhicule (figure 1).

Cet organe de direction OD correspond ici à la colonne de direction du véhicule automobile, sur laquelle est fixé le volant de direction de ce véhicule.

L'angle de braquage effectif $\alpha_E$ correspond alors à la position angulaire de ce volant de direction, ou, de manière équivalente, à la position angulaire de cette colonne de direction.

En variante, l'organe de direction du véhicule automobile pourrait correspondre par exemple à la crémaillère de direction de ce véhicule. L'angle de braquage mentionné ci-dessus correspondrait à une position de cette crémaillère de direction.

En variante encore, cet angle de braquage pourrait repérer l'orientation de roues du véhicule, ici l'orientation de roues directrices avant de ce véhicule.

Le véhicule automobile comprend également un capteur de couple permettant d'acquérir un couple $T_A$ exercé par le conducteur du véhicule automobile sur cet organe de direction OD, en l'occurrence, ici, un couple exercé par le conducteur sur la colonne de direction par l'intermédiaire du volant de direction du véhicule.

Le véhicule automobile comprend également un actionneur, tel qu'un moteur électrique, adapté pour exercer un couple correctif Tc sur l'organe de direction OD de ce véhicule.

Ce couple correctif $T_C$ s'ajoute au couple $T_A$ exercé par le conducteur sur l'organe de direction OD du véhicule automobile (figure 1).

Le véhicule automobile comprend également un capteur adapté pour acquérir au moins une donnée relative à une position POS de ce véhicule automobile par rapport à une voie de circulation qu'il emprunte.

Ce capteur comprend ici une caméra vidéo dont le champ de vision couvre une portion de cette voie de circulation située face au véhicule automobile. Ladite donnée relative à la position POS de ce véhicule automobile comprend alors une image de cette portion de la voie de circulation empruntée par le véhicule automobile.

La position POS du véhicule automobile par rapport à la voie de circulation qu'il emprunte correspond ici à un écart entre le véhicule automobile et le milieu de cette voie de circulation.

En variante, au lieu de comprendre une caméra vidéo, ce capteur pourrait par exemple comprendre un radar ou un lidar (selon l'acronyme anglo-saxon de « Light Détection And Ranging ») permettant de détecter des objets bordant cette voie de circulation, tels qu'une glissière de sécurité, un parapet, ou une ligne de marquage au sol. Dans ce cas, ladite donnée relative à la position de ce véhicule automobile comprendrait par exemple un signal d'écho reçu par ce capteur.

Ce véhicule automobile comprend également un module électronique d'analyse adapté pour déterminer cette position POS du véhicule automobile par rapport à la voie de circulation qu'il emprunte, à partir de ladite donnée relative à cette position. Cette détermination est réalisée ici par analyse de l'image acquise par la caméra vidéo du véhicule automobile. Plus particulièrement, ici, au moins l'une des deux lignes de marquage au sol repérant l'un des bords de la cette voie de circulation est identifiée dans cette image, et des caractéristiques géométriques de cette ligne de marquage, telles que sa forme d'ensemble et sa position dans l'image, sont déterminées. La position du véhicule automobile par rapport à cette ligne de marquage, puis sa position POS par rapport au milieu de la voie de circulation sont ensuite déterminées sur la base de ces caractéristiques géométriques.

Ce module électronique d'analyse est également adapté à déterminer le couple correctif $T_C$ à exercer sur l'organe de direction OD du véhicule automobile, en fonction notamment de :

- la position POS du véhicule automobile par rapport à la voie de circulation qu'il emprunte, de
- l'angle de braquage effectif $\alpha_E$ de l'organe de direction OD du véhicule, et du
- couple $T_A$ exercé par le conducteur du cet organe de direction OD.

Ce module électronique d'analyse est adapté aussi pour commander l'actionneur susmentionné de manière que cet actionneur exerce le couple correctif Tc, précédemment déterminé, sur l'organe de direction OD du véhicule automobile.

Le procédé d'aide à la conduite mis en œuvre par le module électronique d'analyse comprend principalement trois étapes qui sont les suivantes :

a) on acquiert au moins une donnée relative à la position POS du véhicule automobile par rapport à la voie de circulation qu'il emprunte,
b) on vérifie si le véhicule automobile sort ou est sur le point de sortir inopinément de ladite voie de circulation, et
c) lorsque cette sortie inopinée est détectée, on déclenche une phase d'intervention PH au cours de laquelle on exerce sur ledit organe de direction OD un couple correctif pour que le véhicule automobile suive une trajectoire cible.

Au cours de l'étape a), ladite donnée relative à la position POS du véhicule automobile par rapport à la voie de circulation qu'il emprunte est acquise au moyen de la caméra vidéo qui équipe ici le véhicule automobile, comme expliqué précédemment.

Au cours de l'étape b), le fait que le véhicule automobile sorte ou soit sur le point de sortir de la voie de circulation qu'il emprunte est déterminé notamment sur la base de ladite position POS du véhicule automobile.

Par exemple, lorsque cette position POS indique que l'écart entre le véhicule automobile et le milieu de cette voie de circulation est supérieur à un écart maximal donné, on détermine que le véhicule sort de cette voie de circulation. Lorsque cette position POS indique que l'écart entre le véhicule automobile et le milieu de cette voie de circulation augmente au cours du temps et tend à devenir supérieur à cet écart maximal, on détermine que le véhicule est sur le point de sortir de cette voie de circulation.

Ici, le fait que le véhicule automobile soit sur le point de sortir de la voie de circulation qu'il emprunte est déterminé également en fonction de l'angle de braquage effectif $\alpha_E$ de l'organe de direction OD du véhicule. Cet angle de braquage effectif $\alpha_E$ est représentatif de la direction vers laquelle se dirige le véhicule automobile. La prise en compte de cet angle de braquage effectif $\alpha_E$, combiné à la position POS du véhicule automobile permet ainsi de déterminer efficacement que le véhicule automobile est sur le point de sortir de cette voie de circulation.

En variante, le fait que véhicule automobile sorte ou soit sur le point de sortir de la voie de circulation qu'il emprunte pourrait être déterminé aussi en fonction d'autres grandeurs relatives au mouvement du véhicule automobile par rapport à la voie de circulation qu'il emprunte, telles que sa vitesse de déplacement par rapport à cette voie de circulation, ou sa vitesse de lacet (la vitesse de lacet du véhicule est définie comme sa vitesse de rotation autour d'un axe perpendiculaire à un plan moyen de la route sur laquelle est situé le véhicule, et peut être mesurée par exemple au moyen d'un gyromètre).

Lorsqu'une sortie ou une sortie imminente du véhicule automobile de la voie de circulation qu'il emprunte est ainsi détectée, on détermine ici que cette sortie est inopinée lorsque les clignotants du véhicule sont dans un état inactif.

Une sortie inopinée du véhicule automobile de la voie de circulation qu'il emprunte correspond notamment à une sortie de cette voie de circulation involontaire de la part du conducteur du véhicule automobile, par exemple du fait d'un état de distraction ou de somnolence de ce conducteur.

Pour éviter cette sortie inopinée du véhicule automobile de la voie de circulation qu'il emprunte, on déclenche alors, à l'étape c), la phase d'intervention PH mentionnée précédemment, au cours de laquelle on exerce ledit couple correctif $T_C$ sur l'organe de direction OD du véhicule automobile, de manière à ce que le véhicule suive ladite trajectoire cible. Cette trajectoire cible est par exemple une trajectoire suivant le milieu de la voie de circulation qu'emprunte ce véhicule.

Les opérations principales réalisées pour calculer ce couple correctif $T_C$ sont représentées schématiquement figure 1.

Tout d'abord, lors d'une opération i), on acquiert l'angle de braquage effectif $\alpha_E$ de l'organe de direction OD du véhicule automobile.

On détermine ensuite, lors d'une opération ii), représentée figure 1 par le bloc B1, un angle de braquage cible ac dans lequel l'organe de direction OD devrait être placé pour que le véhicule automobile suive la trajectoire cible mentionnée ci-dessus.

Cet angle de braquage cible ac est déterminé notamment en fonction de la position POS du véhicule automobile par rapport à la voie de circulation qu'il emprunte (position POS dont on rappelle qu'elle est déterminée grâce à la donnée acquise à l'étape a)), et en fonction de l'angle de braquage effectif $\alpha_E$ de cet organe de direction OD.

Cet angle de braquage cible ac peut être nettement différent de l'angle de braquage effectif $\alpha_E$ de cet organe de direction OD, en particulier dans une situation dans laquelle le conducteur du véhicule dirigerait par inadvertance ce véhicule vers l'extérieur de la voie de circulation empruntée.

Au cours de l'opération suivante iii), représentée figure 1 par le bloc B2, on détermine un angle de braquage cible filtré $\alpha_{CF}$, obtenu par filtrage de l'angle de braquage cible ac.

Ce filtrage consiste ici à limiter les variations de l'angle de braquage du véhicule, de manière à éviter tout à-coup.

Cette opération iii) est réalisée de manière à ce que :

- à un instant initial t1 de ladite phase d'intervention PH, l'angle de braquage cible filtré $\alpha_{CF}$ est égal à l'angle de braquage effectif $\alpha_E$ :

$$\alpha_{CF}(t1) = \alpha_E(t1) \qquad (F1)$$

puis que
- après cet instant initial t1, l'angle de braquage cible filtré $\alpha_{CF}$ tend vers ledit angle de braquage cible ac, en présentant un taux de variation dont la valeur absolue reste inférieure à un premier seuil SE1 déterminé, c'est-à-dire tende vers ledit angle de braquage cible ac tout en vérifiant l'inégalité (F2) suivante :

$$\left| \frac{d\,\alpha_{CF}}{d\,t} \right| \leq SE1 \qquad (F2)$$

Plus précisément, l'angle de braquage cible filtré $\alpha_{CF}$ est déterminé, lors de cette opération iii), de manière à varier continument, sans-à-coup, et en tendant au plus vite vers l'angle de braquage cible ac, et cela tout en vérifiant l'inégalité (F2).

Ainsi, ici, après le déclenchement de cette phase d'intervention PH, l'angle de braquage cible filtré $\alpha_{CF}$ tend vers l'angle de braquage cible ac en présentant un taux de variation dont la valeur absolue $\left|\dfrac{d\,\alpha_{CF}}{d\,t}\right|$ est égale au premier seuil SE1, et cela tant que cet angle de braquage cible filtré $\alpha_{CF}$ n'a pas rattrapé l'angle de braquage cible ac.

Au cours de l'opération iii), l'angle de braquage cible filtré $\alpha_{CF}$ est déterminé en outre de manière que, dès que la différence entre l'angle de braquage cible filtrée $\alpha_{CF}$ et l'angle de braquage cible ac s'annule ou change de signe, l'angle de braquage cible filtré $\alpha_{CF}$ tend vers ledit angle de braquage cible ac en présentant un taux de variation dont la valeur absolue reste inférieure à un deuxième seuil SE2 déterminé qui est supérieur audit premier seuil SE1, c'est-à-dire tend vers ledit angle de braquage cible ac tout en vérifiant l'inégalité (F3) suivante :

$$\left|\frac{d\,\alpha_{CF}}{d\,t}\right| \le SE2 \qquad (F3)$$

Autrement formulé, dès que l'angle de braquage cible filtré $\alpha_{CF}$ a rattrapé l'angle de braquage cible ac (non-filtré) vers lequel il tend, on autorise des variations au cours du temps de cet angle de braquage cible filtré $\alpha_{CF}$ plus rapides (puisque ce deuxième seuil SE2 est supérieur au premier seuil SE1).

Plus précisément, ici, une fois que l'angle de braquage cible filtré $\alpha_{CF}$ a rattrapé l'angle de braquage cible ac, l'angle de braquage cible filtré $\alpha_{CF}$ reste égal à l'angle de braquage cible ac, et cela tant que la valeur

absolue $\left|\dfrac{d\,\alpha_{C}}{d\,t}\right|$ du taux de variation de l'angle de braquage cible ac reste inférieure au deuxième SE2. Si la

valeur absolue $\left|\dfrac{d\,\alpha_{C}}{d\,t}\right|$ de cet angle de braquage cible ac devient supérieur à ce deuxième seuil SE2, alors, la

valeur absolue $\left|\dfrac{d\,\alpha_{CF}}{d\,t}\right|$ du taux de variation l'angle de braquage cible filtré $\alpha_{CF}$ est limitée à ce deuxième seuil SE2, et l'angle de braquage cible filtré tend vers l'angle de braquage cible continument pour le rattraper.

Au cours de ladite phase d'intervention PH, l'assistance à la conduite du véhicule apportée en exerçant ledit couple correctif $T_{C}$ sur l'organe de direction OD du véhicule peut être suspendue, en annulant ce couple correctif Tc, comme cela sera décrit plus loin.

Après une telle suspension de l'assistance, lors d'une reprise de cette assistance, l'angle de braquage cible ac est filtré lors de l'opération iii) de manière que :

- à un instant initial t3 de ladite reprise de l'assistance (figures 2 à 4), l'angle de braquage cible filtré $\alpha_{CF}$ est égal à l'angle de braquage effectif $\alpha_{E}$ à cet instant initial t3 :

$$\alpha_{CF}\,(t3) = \alpha_{E}\,(t3) \qquad (F4)$$

puis que

- après cet instant initial, l'angle de braquage cible filtré $\alpha_{CF}$ tend vers ledit angle de braquage cible ac en présentant un taux de variation dont la valeur absolue reste inférieure à un troisième seuil SE3 déterminé donné, c'est-à-dire tend vers ledit angle de braquage cible ac tout en vérifiant l'inégalité (F5) suivante :

$$\left|\frac{d\,\alpha_{CF}}{d\,t}\right| \le SE3 \qquad (F5)$$

Ce troisième seuil SE3 est ici inférieur au deuxième seuil SE2. Plus particulièrement, ici, ce troisième seuil SE3 est également inférieur au premier seuil SE1.

Plus précisément, lors de cette reprise de l'assistance, l'angle de braquage cible filtré $\alpha_{CF}$ est déterminé de manière à varier continument, sans à-coup, et en tendant au plus vite vers l'angle de braquage cible ac, et cela tout en vérifiant l'inégalité (F5).

Ainsi, ici, lors de cette reprise de l'assistance, l'angle de braquage cible filtré $\alpha_{CF}$ tend vers l'angle de braquage cible ac en présentant un taux de variation dont la valeur absolue $\left|\dfrac{d\,\alpha_{CF}}{d\,t}\right|$ est égale au premier seuil SE3, et cela tant que cet angle de braquage cible filtré $\alpha_{CF}$ n'a pas rattrapé l'angle de braquage cible ac.

De même qu'au début de ladite phase d'intervention PH, après cette reprise de l'assistance, il est prévu en outre, dès que la différence entre l'angle de braquage cible filtrée $\alpha_{CF}$ et l'angle de braquage cible ac s'annule ou change de signe, de filtrer l'angle de braquage cible filtré $\alpha_{CF}$ pour qu'il tende vers ledit angle de braquage cible ac en présentant un taux de variation dont la valeur absolue reste inférieure audit deuxième seuil SE2, c'est-à-dire tende vers ledit angle de braquage cible ac tout en vérifiant l'inégalité (F3) ci-dessus.

Les opérations de l'étape c) décrites ci-dessus peuvent par exemple être réalisées au moyen d'un microprocesseur du module électronique d'analyse susmentionné, ce microprocesseur exécutant un code informatique généré initialement, lors de la mise au point de ce procédé, grâce à l'environnement informatique Simulink® (marque déposée).

Dans ce cas, l'opération iii) peut par exemple être réalisée en utilisant un bloc de filtrage spécifique obtenu en modifiant le bloc de filtrage « Rate_Limiter » de l'environnement informatique Simulink®, pour ajouter à ce bloc de filtrage « Rate_Limiter » des fonctionnalités et des entrées supplémentaires. Ces entrées supplémentaires peuvent comprendre par exemple une entrée destinée à recevoir une commande de remise à zéro, et une entrée destinée à recevoir une valeur de remise à zéro. Les fonctionnalités supplémentaires mentionnées ci-dessus comprennent alors une fonction de remise à zéro de la sortie de ce bloc de filtrage spécifique permettant, sur commande, de donner à cette sortie une valeur égale à la valeur de remise à zéro mentionnée ci-dessus.

Pour réaliser l'opération iii), l'angle de braquage effectif $\alpha_E$ est alors fourni en entrée de ce bloc de filtrage spécifique, au niveau de l'entrée destinée à recevoir la valeur de remise à zéro. Dans ce cas, on fournit aussi l'angle de braquage cible ac au niveau d'une entrée de ce bloc de filtrage spécifique similaire à l'entrée « Input » du bloc « Rate_Limiter ». On fournit également, au niveau d'une entrée de ce bloc de filtrage spécifique correspondant au « Rising slew rate » du bloc « Rate_Limiter », le seuil à utiliser pour filtrer l'évolution temporelle de l'angle de braquage cible $\alpha_c$. On rappelle que ce seuil à utiliser correspond, au début de ladite phase d'intervention PH, au premier seuil SE1, puis qu'il correspond au deuxième SE2 dès que la différence entre l'angle de braquage cible filtrée $\alpha_{CF}$ et l'angle de braquage cible ac s'annule ou change de signe, le troisième seuil SE3 étant quant à lui utilisé lors d'une reprise de l'assistance à la conduite du véhicule automobile, après que cette assistance ait été suspendue. L'angle de braquage cible filtré $\alpha_{CF}$ est alors fourni par la sortie de ce bloc de filtrage spécifique.

Ici, l'opération iii) comprend en outre, après les opérations de filtrage décrites ci-dessus, une opération au cours de laquelle on limite la valeur absolue de l'angle de braquage cible filtré $\alpha_{CF}$ pour qu'elle reste inférieure à un seuil de sécurité $\alpha_{MAX}$ déterminé, c'est-à-dire pour que l'angle de braquage cible filtré $\alpha_{CF}$ vérifie l'inégalité (F6) suivante :

$$|\alpha_{CF}| \leq \alpha_{MAX} \qquad (F6)$$

Plus précisément :

- lorsque l'inégalité (F6) est vérifiée, on conserve pour l'angle de braquage cible filtré $\alpha_{CF}$ la valeur obtenue à l'issue des opérations de filtrages (de l'opération iii)) décrites ci-dessus,
- lorsque l'angle de braquage cible filtré $\alpha_{CF}$ est supérieur à ce seuil de sécurité $\alpha_{MAX}$, on remplace la valeur l'angle de braquage cible filtré $\alpha_{CF}$ par la valeur de ce seuil de sécurité $\alpha_{MAX}$, et
- lorsque l'angle de braquage cible filtré $\alpha_{CF}$ est inférieur à l'opposé - $\alpha_{MAX}$ de ce seuil de sécurité, on remplace la valeur de l'angle de braquage cible filtré $\alpha_{CF}$ par la valeur de l'opposé - $\alpha_{MAX}$ de ce seuil de sécurité.

L'opération iii) décrite ci-dessus est suivie d'une opération iv), représentée figure 1 par le bloc B3, au cours de laquelle on détermine le couple correctif $T_C$ à exercer sur l'organe de direction OD du véhicule, en fonction notamment de l'angle de braquage cible filtré $\alpha_{CF}$ déterminé précédemment.

Plus précisément, ici, l'opération iv) comprend une première sous-étape, représentée figure 1 par le bloc B31, au cours de laquelle on détermine une consigne de couple $T_C^0$, en fonction notamment de l'angle de braquage cible filtré $\alpha_{CF}$ et de l'angle de braquage effectif $\alpha_E$. Cette consigne de couple $T_C^0$ correspond à un couple à exercer sur l'organe de direction OD du véhicule pour que cet organe de direction OD atteigne ledit angle de braquage cible filtré, c'est-à-dire pour que l'angle de braquage effectif $\alpha_E$ atteigne cet angle de braquage cible filtré acF.

Cette consigne de couple $T_C^0$ est obtenue par exemple au moyen d'un correcteur de type PID (selon l'acronyme de correcteur Proportionnel, Intégral et Dérivé).

L'opération iv) comprend également une deuxième sous-étape, représentée figure 1 par le bloc B32, au cours de laquelle on détermine le couple correctif $T_C$ à exercer sur l'organe de direction OD du véhicule automobile, en fonction notamment de la consigne de couple $T_C^0$, et du couple $T_A$ exercé par le conducteur du véhicule sur cet organe de direction OD.

Le couple $T_A$ exercé par le conducteur du véhicule sur cet organe de direction OD est acquis grâce au capteur de couple du véhicule automobile mentionné précédemment.

Le couple correctif $T_C$ ainsi déterminé est ensuite appliqué sur l'organe de direction OD du véhicule, au moyen de l'actionneur mentionné précédemment, et s'ajoute au couple $T_A$ exercé par le conducteur du véhicule sur cet organe de direction OD.

Ici, le couple correctif $T_C$ est déterminé au cours de cette sous-étape de manière :

- soit à être égal à la différence $T_C^0 - T_A$ entre la consigne de couple $T_C^0$ et le couple $T_A$ exercé par le conducteur du véhicule sur cet organe de direction OD,
- soit à une valeur absolue inférieure à la valeur absolue de cette différence.

Juste après le déclenchement de ladite phase d'intervention PH, par exemple, le couple correctif $T_C$ est déterminé de manière à être égal à cette différence $T_C^0 - T_A$ entre la consigne de couple $T_C^0$ et le couple $T_A$ exercé par le conducteur du véhicule sur cet organe de direction OD.

Au cours de cette phase d'intervention PH, lorsqu'il est détecté qu'une sortie inopinée du véhicule automobile de la voie de circulation qu'il emprunte n'est plus sur le point de se produire, et lorsque le couple $T_A$ exercé par le conducteur indique que ce conducteur commande activement la direction du véhicule automobile, le couple correctif $T_C$ est alors déterminé de manière à présenter une valeur absolue inférieure à la valeur absolue de cette différence $T_C^0 - T_A$. Ici, dans une telle situation, le couple correctif $T_C$ est plus précisément annulé, si bien que l'assistance à la conduite du véhicule est alors suspendue. Ici, on considère que le couple $T_A$ exercé par le conducteur indique que ce conducteur commande activement la direction du véhicule automobile lorsque ce couple est supérieur à un seuil déterminé donné. En variante, le fait que le conducteur commande activement la direction du véhicule automobile pourrait par exemple être déduite de l'évolution au cours du temps de la consigne de couple $T_C^0$.

Cette dernière disposition permet avantageusement, dans cette situation où une assistance à la conduite n'est plus nécessaire (pour éviter une sortie inopinée de la voie de circulation empruntée), de donner plus de liberté au conducteur du véhicule dans sa commande de direction de ce véhicule. En effet, le couple correctif $T_C$ exercé sur l'organe de direction OD du véhicule en plus du couple $T_A$ exercé par le conducteur est alors nul (ou tout au moins présente une valeur réduite).

Cette assistance à la conduite peut aussi être suspendue lorsqu'il est détecté que le véhicule automobile s'est suffisamment rapproché de ladite trajectoire cible, et lorsque le couple $T_A$ exercé par le conducteur indique que ce conducteur commande activement la direction du véhicule automobile.

Après une telle suspension de l'assistance, lorsqu'une sortie inopinée du véhicule automobile hors de la voie de circulation qu'il emprunte est détectée, il est prévu de déclencher une reprise de l'assistance en exerçant à nouveau ledit couple correctif sur ledit organe de direction OD du véhicule, c'est-à-dire ici, plus précisément, en déterminant à nouveau le couple correctif $T_C$ de manière à ce qu'il soit égal à la consigne en couple $T_C^0$.

De manière optionnelle, cette reprise de l'assistance peut aussi être déclenchée lorsque la valeur de la différence entre l'angle de braquage effectif et l'angle de braquage cible filtré devient supérieure à un seuil donné.

Cette reprise de l'assistance peut aussi être déclenchée lorsque le couple $T_A$ exercé par le conducteur indique que ce conducteur ne commande pas activement la direction du véhicule automobile. Cette indication peut par exemple être déduite du fait que ce couple $T_A$ exercé par le conducteur présente une valeur absolue inférieure à un couple seuil donné, en dessous duquel il est considéré que le conducteur n'est pas en train d'agir pas sur l'organe de direction OD du véhicule automobile pour corriger la trajectoire de ce véhicule.

Les opérations i) à iv) sont ici réalisées en continu, y compris lorsque l'assistance à la conduite est suspendue en annulant le couple correctif Tc.

Grâce au filtrage de l'angle de braquage cible ac réalisé lors de l'opération iii), l'angle de braquage cible filtré $\alpha_{CF}$ à partir duquel est déterminé ce couple correctif $T_C$ présente au cours du temps une évolution progressive, continue, sans à-coup, y compris au début de ladite phase d'intervention PH, ou lors d'une reprise de l'assistance à la conduite suivant une suspension de cette assistance.

Cette évolution progressive du couple correctif est agréable pour le conducteur du véhicule et évite de le surprendre ou de le perturber dans sa conduite du véhicule, notamment dans une situation de sortie imminente de voie circulation pour laquelle il est particulièrement souhaitable d'éviter de surprendre trop soudainement le conducteur, afin d'éviter une réaction incontrôlée de sa part.

Par ailleurs, le fait d'autoriser des variations plus rapides de cet angle de braquage cible filtré $\alpha_{CF}$, une fois qu'il a rattrapé l'angle de braquage cible ac (non filtré), via l'utilisation, dans le filtrage de l'angle de braquage cible ac d'un deuxième seuil SE2 supérieur au premier seuil SE1, permet d'obtenir des performances élevées pour ce procédé d'aide à la conduite, en particulier un temps de réaction avantageusement court permettant de suivre avec précision ladite trajectoire cible.

Par ailleurs, limiter la valeur absolue de l'angle de braquage cible $\alpha_{CF}$ pour qu'elle reste inférieure au seuil de sécurité $\alpha_{MAX}$ permet de limiter également la valeur absolue du couple correctif Tc. Cette disposition améliore la fiabilité de ce procédé en évitant que le couple correctif $T_C$ ne puisse atteindre des valeurs trop grandes (en valeur absolue), ce qui pourrait s'avérer dangereux.

Sur les figures 2 à 4, on a représenté l'évolution au cours du temps t de différentes grandeurs acquises ou évaluées conformément au procédé d'aide à la conduite décrit ci-dessus, pour un exemple de trajet du véhicule automobile dans lequel est mis en œuvre ce procédé.

Plus précisément, sur la figure 2, on a représenté l'évolution au cours du temps t de l'angle de braquage effectif $\alpha_E$, de l'angle de braquage cible ac, et de l'angle de braquage cible filtré $\alpha_{CF}$, pour cet exemple de trajet.

Sur la figure 3, on a indiqué sous forme graphique, pour chaque instant de ce trajet, lequel des premier SE1, deuxième SE2 et troisième seuil SE3 est utilisé à l'étape iii) pour filtrer l'angle de braquage cible ac.

Sur la figure 4, on a indiqué sous forme graphique, pour ce même trajet du véhicule automobile, à quel instant l'instant est déclenchée ladite phase d'intervention PH. On a également représenté sur la figure 4 un intervalle temporel SUSP de ce trajet pendant lequel l'assistance à la conduite de ce véhicule est suspendue en annulant le couple correctif $T_C$ exercé sur l'organe de direction OD de ce véhicule.

A l'instant t1 (figures 2 à 4), une sortie inopinée du véhicule automobile de la voie de circulation qu'il emprunte est détectée, et ladite phase d'intervention PH est déclenchée.

On rappelle qu'au cours de cette phase d'intervention PH on exerce sur l'organe de direction OD du véhicule automobile un couple correctif $T_C$ déterminé notamment en fonction de l'angle de braquage cible filtré $\alpha_{CF}$.

On remarque sur la figure 2 qu'à l'instant initial t1 de cette phase d'intervention PH, l'angle de braquage cible ac présente une valeur nettement différente de l'angle de braquage effectif $\alpha_E : \alpha_C(t1) \neq \alpha_E(t1)$, ce qui était prévisible. En effet, si la valeur de l'angle de braquage effectif $\alpha_E$ était maintenu à sa valeur $\alpha_E(t1)$ à cet instant initial t1, le véhicule automobile sortirai probablement de la voie de circulation qu'il emprunte (une sortie inopinée de cette voie de circulation ayant été détectée), alors que la valeur de l'angle de braquage cible ac à cet instant initial t1, a tendance, lorsqu'appliquée à l'organe de direction OD du véhicule, à amener ce véhicule sur une trajectoire cible qui le maintient sur cette voie de circulation.

Immédiatement après cet instant initial t1, le seuil auquel est limité le taux de variation de l'angle de braquage cible filtré $\alpha_{CF}$ est le premier seuil SE1, comme on peut le voir figure 3.

On constate figure 2 que l'angle de braquage cible filtré $\alpha_{CF}$ est initialement égal à l'angle de braquage effectif $\alpha_E$ puis tend vers l'angle de braquage cible ac en présentant un taux de variation, c'est-à-dire ici une pente, de valeur absolue inférieure ou égale (en l'occurrence ici égale) à ce premier seuil SE1.

Du fait du couple correctif $T_C$ appliqué sur l'organe de direction OD du véhicule, l'angle de braquage effectif $\alpha_E$ évolue alors pour tendre vers cet angle de braquage cible filtré $\alpha_{CF}$, comme on le constate figure 2.

L'angle de braquage cible filtré $\alpha_{CF}$ rattrape l'angle de braquage cible ac à un instant t2 ultérieur (t2>t1), c'est-à-dire qu'à cet instant t2, la différence entre l'angle de braquage cible filtré et l'angle de braquage cible s'annule ou change de signe, ici s'annule.

A partir de cet instant t2, le seuil auquel est limité le taux de variation de l'angle de braquage cible filtré $\alpha_{CF}$ est le deuxième seuil SE2, comme on peut le voir figure 3. On rappelle que ce deuxième seuil SE2 est supérieur au premier seuil SE1.

A un instant ultérieur t21 (t21>t2), il est détecté que le véhicule automobile s'est rapproché de ladite trajectoire cible (plus précisément, il est détecté qu'une distance séparant le véhicule automobile de cette trajectoire cible est inférieure à une distance limite donnée). Le couple $T_A$ exercé par le conducteur indique par ailleurs, à cet instant t21, que ce conducteur commande activement la direction du véhicule automobile. L'assistance à la conduite est donc suspendue à partir de cet instant t21 (figure 4), en annulant, au niveau du bloc de filtrage B23 représenté figure 1, le couple correctif Tc.

A un instant t3 ultérieur (t3>t21), une sortie inopinée du véhicule automobile hors de la voie de circulation qu'il emprunte est détectée à nouveau, en absence d'une action marquée du conducteur du véhicule automobile sur l'organe de direction de ce véhicule. L'assistance à la conduite reprend alors.

A partir de cet instant initial t3 de la reprise de l'assistance, le seuil auquel est limité le taux de variation de l'angle de braquage cible filtré $\alpha_{CF}$ est le troisième seuil SE3, comme on peut le voir figure 3. On rappelle que ce troisième seuil SE3 est inférieur au deuxième seuil SE2, et en outre, ici, inférieur au premier seuil SE1.

On constate figure 2 que l'angle de braquage cible filtré $\alpha_{CF}$ est égal à l'angle de braquage effectif $\alpha_E$, à l'instant initial t3 de reprise de l'assistance, puis tend vers l'angle de braquage cible ac en présentant un taux de variation, c'est-à-dire ici une pente, de valeur absolue inférieure ou égale (en l'occurrence ici égale) à ce troisième seuil SE3.

A nouveau, du fait du couple correctif $T_C$ appliqué sur l'organe de direction OD du véhicule, l'angle de braquage effectif $\alpha_E$ évolue alors pour tendre vers cet angle de braquage cible filtré $\alpha_{CF}$, comme on le constate figure 2.

L'angle de braquage cible filtré $\alpha_{CF}$ rattrape l'angle de braquage cible ac à un instant t4 ultérieur (t4>t3), c'est-à-dire qu'à cet instant t4, la différence entre l'angle de braquage cible filtré et l'angle de braquage cible s'annule ou change de signe, ici s'annule.

A partir de cet instant t4, de même que précédemment, le seuil auquel est limité le taux de variation de l'angle de braquage cible filtré $\alpha_{CF}$ est le deuxième seuil SE2 (figure 3).

**Revendications**

1. Procédé d'aide à la conduite d'un véhicule automobile empruntant une voie de circulation, comprenant les étapes suivantes :

   a) on acquiert au moins une donnée relative à une position (POS) du véhicule automobile par rapport à la voie de circulation,
   b) on vérifie si le véhicule automobile sort ou est sur le point de sortir inopinément de ladite voie de circulation,

c) lorsque cette sortie inopinée est détectée, on déclenche une phase d'intervention (PH) au cours de laquelle on exerce sur ledit organe de direction (OD) un couple correctif (Tc) pour que le véhicule automobile suive une trajectoire cible,

le calcul dudit couple correctif (Tc) comprenant les opérations suivantes :

i) on acquiert un angle de braquage effectif ($\alpha_E$) dudit organe de direction (OD) du véhicule,

ii) on détermine, en fonction de la donnée acquise à l'étape a), un angle de braquage cible (ac) dans lequel ledit organe de direction (OD) devrait être placé pour que le véhicule automobile suive ladite trajectoire cible,

iii) on détermine un angle de braquage cible filtré ($\alpha_{CF}$) de manière à ce que :

- à un instant initial de ladite phase d'intervention (PH), l'angle de braquage cible filtré ($\alpha_{CF}$) est égal à l'angle de braquage effectif ($\alpha_E$) à cet instant initial, puis que
- après cet instant initial, l'angle de braquage cible filtré ($\alpha_{CF}$) tend vers ledit angle de braquage cible (ac), en présentant un taux de variation dont la valeur absolue reste inférieure à un premier seuil déterminé (SE1), et

iv) on détermine ledit couple correctif (Tc) à exercer, en fonction de cet angle de braquage cible filtré ($\alpha_{CF}$),

**caractérisé en ce que** , au cours de l'opération iii), on détermine l'angle de braquage cible filtré ($\alpha_{CF}$) de manière que, en outre, dès que la différence entre l'angle de braquage cible filtré ($\alpha_{CF}$) et l'angle de braquage cible (ac) s'annule ou change de signe, l'angle de braquage cible filtré ($\alpha_{CF}$) tend vers ledit angle de braquage cible (ac) en présentant un taux de variation dont la valeur absolue reste inférieure à un deuxième seuil déterminé (SE2) qui est supérieur audit premier seuil (SE1).

2. Procédé selon la revendication 1, dans lequel ladite sortie inopinée est détectée en fonction de la donnée acquise à l'étape a).

3. Procédé selon l'une des revendications 1 et 2, dans lequel ladite sortie inopinée est détectée en fonction de l'état actif ou inactif des clignotants du véhicule automobile.

4. Procédé selon l'une des revendications 1 à 3, dans lequel le couple correctif (Tc) exercé sur ledit organe de direction (OD) du véhicule est déterminé en outre en fonction d'un couple exercé par le conducteur du véhicule sur cet organe de direction (OD).

5. Procédé selon la revendication 4, dans lequel, au cours de ladite phase d'intervention (PH), il est prévu de suspendre l'assistance, en annulant le couple correctif (Tc), lorsque le couple ($T_A$) exercé par le conducteur du véhicule sur ledit organe de direction (OD) dépasse un seuil déterminé donné.

6. Procédé selon la revendication 5 dans lequel, lorsque l'assistance est suspendue et qu'une sortie inopinée du véhicule automobile hors de la voie de circulation qu'il emprunte est détectée, il est prévu de déclencher une reprise de l'assistance en exerçant à nouveau ledit couple correctif (Tc) sur ledit organe de direction (OD) du véhicule.

7. Procédé selon la revendication 6, dans lequel la reprise de l'assistance est déclenchée en fonction également du couple ($T_A$) exercé par le conducteur du véhicule automobile sur ledit organe de direction (OD).

8. Procédé selon l'une des revendications 6 et 7 dans lequel, au cours de l'opération iii), le filtrage de l'angle de braquage cible (ac) est réalisé en outre de manière que:

- à un instant initial de ladite reprise de l'assistance, l'angle de braquage cible filtré ($\alpha_{CF}$) soit égal à l'angle de braquage effectif ($\alpha_E$) à cet instant initial, puis que
- après cet instant initial, l'angle de braquage cible filtré ($\alpha_{CF}$) tende vers ledit angle de braquage cible (ac) en présentant un taux de variation dont la valeur absolue reste inférieure à un troisième seuil (SE3) déterminé donné, ce troisième seuil (SE3) étant inférieur audit deuxième seuil (SE2).

9. Procédé selon l'une des revendications 1 à 8, dans lequel, au cours de l'opération iii), l'angle de braquage cible filtré ($\alpha_{CF}$) est déterminé en outre de manière à présenter une valeur absolue restant inférieure à un seuil de sécurité déterminé ($\alpha_{MAX}$).

**Patentansprüche**

1. Fahrerassistenzverfahren für ein auf einem Fahrstreifen fahrendes Kraftfahrzeug, das die folgenden Schritte enthält:

a) mindestens ein Datenwert bezüglich einer Position (POS) des Kraftfahrzeugs bezüglich des Fahrstreifens wird erfasst,
b) es wird überprüft, ob das Kraftfahrzeug den Fahrstreifen unerwartet verlässt oder im Begriff ist, ihn zu verlassen,

c) wenn dieses unerwartete Verlassen erkannt wird, wird eine Phase des Eingreifens (PH) ausgelöst, während der ein korrigierendes Moment ($T_C$) auf das Lenkelement (OD) ausgeübt wird, damit das Kraftfahrzeug einer Ziel-Fahrspur folgt,

wobei die Berechnung des korrigierenden Moments ($T_C$) die folgenden Vorgänge enthält:

i) ein effektiver Lenkwinkel ($\alpha_E$) des Lenkelements (OD) des Fahrzeugs wird erfasst,

ii) abhängig vom im Schritt a) erfassten Datenwert wird ein Ziel-Lenkwinkel ($\alpha_C$) bestimmt, in dem das Lenkelement (OD) platziert werden sollte, damit das Kraftfahrzeug der Ziel-Fahrspur folgt,

iii) ein gefilterter Ziel-Lenkwinkel ($\alpha_{CF}$) wird so bestimmt, dass:

- zu einem Anfangszeitpunkt der Eingreifphase (PH) der gefilterte Ziel-Lenkwinkel ($\alpha_{CF}$) gleich dem effektiven Lenkwinkel ($\alpha_E$) zu diesem Anfangszeitpunkt ist, dann dass
- nach diesem Anfangszeitpunkt der gefilterte Ziel-Lenkwinkel ($\alpha_{CF}$) zum Ziel-Lenkwinkel ($\alpha_C$) tendiert, indem er einen Änderungsgrad aufweist, dessen Absolutwert niedriger als eine erste bestimmte Schwelle (SE1) bleibt, und

iv) das auszuübende korrigierende Moment ($T_C$) wird abhängig von diesem gefilterten Ziel-Lenkwinkel ($\alpha_{CF}$) bestimmt,

**dadurch gekennzeichnet, dass** während des Vorgangs iii) der gefilterte Ziel-Lenkwinkel ($\alpha_{CF}$) so bestimmt wird, dass außerdem, sobald die Differenz zwischen dem gefilterten Ziel-Lenkwinkel ($\alpha_{CF}$) und dem Ziel-Lenkwinkel ($\alpha_C$) sich aufhebt oder ihr Vorzeichen ändert, der gefilterte Ziel-Lenkwinkel ($\alpha_{CF}$) zum Ziel-Lenkwinkel ($\alpha_C$) tendiert, indem er einen Änderungsgrad aufweist, dessen Absolutwert unter einer zweiten bestimmten Schwelle (SE2) bleibt, die höher ist als die erste Schwelle (SE1).

2. Verfahren nach Anspruch 1, wobei das unerwartete Verlassen abhängig vom im Schritt a) erfassten Datenwert erkannt wird.

3. Verfahren nach einem der Ansprüche 1 und 2, wobei das unerwartete Verlassen abhängig vom aktiven oder inaktiven Zustand der Fahrtrichtungsanzeiger des Kraftfahrzeugs erkannt wird.

4. Verfahren nach einem der Ansprüche 1 bis 3, wobei das auf das Lenkelement (OD) des Fahrzeugs ausgeübte korrigierende Moment ($T_C$) außerdem abhängig von einem Drehmoment bestimmt wird, das vom Fahrer des Fahrzeugs auf dieses Lenkelement (OD) ausgeübt wird.

5. Verfahren nach Anspruch 4, wobei während der Eingreifphase (PH) vorgesehen ist, die Assistenz auszusetzen, indem das korrigierende Moment ($T_C$) aufgehoben wird, wenn das vom Fahrer des Fahrzeugs auf das Lenkelement (OD) ausgeübte Drehmoment ($T_A$) eine gegebene bestimmte Schwelle überschreitet.

6. Verfahren nach Anspruch 5, wobei, wenn die Assistenz ausgesetzt ist und ein unerwartetes Verlassen des Kraftfahrzeugs seines Fahrstreifens, auf dem es fährt, erkannt wird, vorgesehen ist, eine Wiederaufnahme der Assistenz auszulösen, indem erneut das korrigierende Moment ($T_C$) auf das Lenkelement (OD) des Fahrzeugs ausgeübt wird.

7. Verfahren nach Anspruch 6, wobei die Wiederaufnahme der Assistenz abhängig ebenfalls von dem Drehmoment ($T_A$) ausgelöst wird, das vom Fahrer des Kraftfahrzeugs auf das Lenkelement (OD) ausgeübt wird.

8. Verfahren nach einem der Ansprüche 6 und 7, wobei während des Vorgangs iii) die Filterung des Ziel-Lenkwinkels ($\alpha_C$) außerdem so durchgeführt wird, dass:

- zu einem Anfangszeitpunkt der Wiederaufnahme der Assistenz der gefilterte Ziel-Lenkwinkel ($\alpha_{CF}$) gleich dem effektiven Lenkwinkel ($\alpha_E$) zu diesem Anfangszeitpunkt ist, dann dass
- nach diesem Anfangszeitpunkt der gefilterte Ziel-Lenkwinkel ($\alpha_{CF}$) zum Ziel-Lenkwinkel ($\alpha_C$) tendiert, indem er einen Änderungsgrad aufweist, dessen Absolutwert niedriger als eine gegebene bestimmte dritte Schwelle (SE3) bleibt, wobei diese dritte Schwelle (SE3) niedriger als die zweite Schwelle (SE2) ist.

9. Verfahren nach einem der Ansprüche 1 bis 8, wobei während des Vorgangs iii) der gefilterte Ziel-Lenkwinkel ($\alpha_{CF}$) außerdem so bestimmt wird, dass er einen Absolutwert aufweist, der unter einer bestimmten Sicherheitsschwelle ($\alpha_{MAX}$) bleibt.

**Claims**

1. Driving assistance method for a motor vehicle occupying a traffic lane, comprising the following steps:

a) at least one datum relating to a position (POS) of the motor vehicle with respect to the traffic lane is acquired,

b) a check is made as to whether the motor vehicle is departing from or is about to depart from said traffic lane unexpectedly,

c) when said unexpected departure is detected, an intervention phase (PH) is triggered, during which a corrective torque ($T_C$) is applied to said steering member (OD) for the motor vehicle to follow a target trajectory,

the calculation of said corrective torque ($T_C$) comprising the following operations:

i) an effective steering angle ($\alpha_E$) of said steering member (OD) of the vehicle is acquired,

ii) a target steering angle ($\alpha_C$) at which said steering member (OD) should be placed for the motor vehicle to follow said target trajectory is determined, as a function of the datum acquired in the step a),

iii) a filtered target steering angle ($\alpha_{CF}$) is determined in such a way that:

- at an initial instant of said intervention phase (PH), the filtered target steering angle ($\alpha_{CF}$) is equal to the effective steering angle ($\alpha_E$) at this initial instant, then
- after this initial instant, the filtered target steering angle ($\alpha_{CF}$) tends towards said target steering angle ($\alpha_C$), while exhibiting a rate of variation, the absolute value of which remains lower than a first determined threshold (SE1), and

iv) said corrective torque ($T_C$) to be applied is determined, as a function of this filtered target steering angle ($\alpha_{CF}$),

**characterized in that**, during the operation iii), the filtered target steering angle ($\alpha_{CF}$) is determined in such a way that, in addition, as soon as the difference between the filtered target steering angle ($\alpha_{CF}$) and the target steering angle ($\alpha_C$) is cancelled or changes sign, the filtered target steering angle ($\alpha_{CF}$) tends towards said target steering angle ($\alpha_C$) while exhibiting a rate of variation, the absolute value of which remains lower than a second determined threshold (SE2) which is higher than said first threshold (SE1).

2. Method according to Claim 1, wherein said unexpected departure is detected as a function of the datum acquired in the step a).

3. Method according to one of Claims 1 and 2, wherein said unexpected departure is detected as a function of the active or inactive state of the indicators of the motor vehicle.

4. Method according to one of Claims 1 to 3, wherein the corrective torque ($T_C$) applied to said steering member (OD) of the vehicle is determined also as a function of a torque applied by the driver of the vehicle to this steering member (OD).

5. Method according to Claim 4, wherein, during said intervention phase (PH), provision is made to suspend the assistance, by cancelling the corrective torque ($T_C$), when the torque ($T_A$) applied by the driver of the vehicle to said steering member (OD) exceeds a given determined threshold.

6. Method according to Claim 5, wherein, when the assistance is suspended and an unexpected departure of the motor vehicle from the traffic lane that it is occupying is detected, provision is made to trigger a resumption of the assistance by once again applying said corrective torque ($T_C$) to said steering member (OD) of the vehicle.

7. Method according to Claim 6, wherein the resumption of the assistance is triggered as a function also of the torque ($T_A$) applied by the driver of the motor vehicle to said steering member (OD).

8. Method according to one of Claims 6 and 7, wherein, during the operation iii), the filtering of the target steering angle ($\alpha_C$) is performed also in such a way that:

- at an initial instant of said resumption of the assistance, the filtered target steering angle ($\alpha_{CF}$) is equal to the effective steering angle ($\alpha_E$) at this initial instant, then
- after this initial instant, the filtered target steering angle ($\alpha_{CF}$) tends towards said target steering angle ($\alpha_C$) while exhibiting a rate of variation, the absolute value of which remains lower than a given determined third threshold (SE3), this third threshold (SE3) being lower than said second threshold (SE2).

9. Method according to one of Claims 1 to 8, wherein, during the operation iii), the filtered target steering angle ($\alpha_{CF}$) is determined also in such a way as to exhibit an absolute value that remains lower than a determined safety threshold ($\alpha_{MAX}$).

# Fig.1

# Fig.2

# Fig.3

# Fig.4

**RÉFÉRENCES CITÉES DANS LA DESCRIPTION**

**Documents brevets cités dans la description**

- US 20080047775 A1
- EP 2591983 A